## Europäisches Patentamt
## European Patent Office
## Office européen des brevets

(19)

(11) Veröffentlichungsnummer: **0 098 372**
**B1**

(12)

# EUROPÄISCHE PATENTSCHRIFT

(45) Veröffentlichungstag der Patentschrift:
04.02.87

(21) Anmeldenummer: **83104889.7**

(22) Anmeldetag: **18.05.83**

(51) Int. Cl.⁴: **C 08 L 27/06,** C 09 J 3/14,
C 09 D 3/74

(54) **Verfahren zum Herstellen von Überzügen und Klebeverbindungen mit Polyvinylchlorid-Plastisolen mit verbesserter Haftung und Plastisole für das Verfahren.**

(30) Priorität: **05.06.82 DE 3221354**

(43) Veröffentlichungstag der Anmeldung:
**18.01.84 Patentblatt 84/3**

(45) Bekanntmachung des Hinweises auf die Patenterteilung:
**04.02.87 Patentblatt 87/6**

(84) Benannte Vertragsstaaten:
**CH DE FR GB IT LI**

(56) Entgegenhaltungen:
**EP-A-0 084 111**
**DE-B-2 840 996**
**FR-A-2 372 862**

**Die Akte enthält technische Angaben, die nach
dem Eingang der Anmeldung eingereicht wurden
und die nicht in dieser Patentschrift enthalten sind.**

(73) Patentinhaber: **SCHERING AKTIENGESELLSCHAFT
Berlin und Bergkamen, Waldstrasse 14 Postfach
15 40, D-4709 Bergkamen (DE)**

(72) Erfinder: **Burba, Christian, Dr. Dipl.- Chem., Gerh.-
Hauptmann- Strasse 9, D-4715 Ascheberg- Herbern
(DE)**
Erfinder: **Goeke, Ulrich, Hülsdunkel 13, D-4670
Lünen (DE)**
Erfinder: **Esper, Norbert, Jahnstrasse 106 a, D-4619
Bergkamen (DE)**

EP 0 098 372 B1

LIBER, STOCKHOLM 1987

## Beschreibung

Gegenstand der Erfindung ist ein Verfahren zum Verkleben von metallischen Werkstoffen bzw. zur Herstellung von Überzügen auf metallischen Werkstoffen mit PVC-Plastisolen mit verbesserter Haftung bei Einbrenntemperaturen ab 90 °C, welche als haftverbessernde Zusätze Kondensationsprodukte aus polymerisierten Fettsäuren, Karbonsäuren und einem Überschuß, bezogen auf Karboxylgruppen der Säurekomponenten, an Polyalkylenpolyaminen enthalten.

Die Verrottungsfestigkeit von Polyvinylchlorid bzw. dessen Copolymerisaten gegen aggressive Medien ist hinlänglich bekannt und wird auf breiter Basis zum Korrosionsschutz von metallischen Oberflächen, zum Verkleben an Dünnblechkonstruktionen und zum Dichten an Schweißnähten, insbesondere im Automobilsektor genutzt.

Solche Überzüge werden in erster Linie in Form weichmacherhaltiger Vinylchlorid-Polymerisate (Plastisole) durch Streichen, Walzen oder Spritzen auf die Oberfläche der zu schützenden Werkstoffe aufgebracht. In einer weitverbreiteten Form bestehen solche Überzugsmassen (Plastisole) aus einem verpastbaren Polyvinylchlorid, das sich im besonderen durch ein difiniertes Quellvermögen im Weichmacher auszeichnet, aus einem Weichmacher oder Weichmachergemisch, Füllstoffen, Stabilisatoren sowie geggebenenfalls Farbpigmenten und Polyvinylchlorid-Verarbeitungshilfsstoffen.

Die Formulierung von weichmacherhaltigen Polyvinylchlorid-Überzugsmassen, deren Herstellung sowie Anwendungstechnik ist weitgehend in: Krekeler Wick, Kunststoff-Handbuch (1963) Band II, Teil 1, S. 396 ff., beschrieben.

Es ist bekannt, daß ein wesentliches Kriterium für die Güte solchermaßen applizierter Plastisole deren Haftung am beschriebenen Werkstoff ist. Dies trifft vor allem für Überzüge auf Metallteilen zu. Lockere Adhäsion der Schutzschicht erhöht die Gefahr des Eindringens aggressiver Medien. Im Falle der Beschreibung kann so z. B. Wasser den Überzug leicht unterwandern und das Metall korrodieren. Dies wird um so eher möglich sein, je geringer die Haftung des Schutzfilms am Metall ist.

Es bestand somit der Bedarf an Plastisolen, die hochfeste Verbindungen zwischen den verschiedensten, insbesondere metallischen Werkstoffen herzustellen erlauben.

Zur Erhöhung der Haftung dieser Überzüge wurde in der DE-OS 21 23 171 bereits vorgeschlagen, dem Plastisol ein Gemisch aus einer mehrfunktionellen organischen Säure oder deren Anhydrid und einer mehrfunktionellen organischen Base einzuarbeiten. Diese Mischung soll bereits bei Härtungstemperaturen unter 140 °C unter Salzbildung miteinander reagieren und dem Plastisol eine gute Haftung verleihen.

Wie aber in der DE-AS 24 02 037 Sp. 2, Z. 25 - 27 und Beispiel 4 d) dargelegt, führte die Nacharbeitung der in der DE-OS gegebenen Anweisung nicht zu zufriedenstellenden Ergebnissen.

Gemäß der DE-AS 26 54 871 werden Polyaminoamide, hergestellt aus einem polymerisierten Fettsäuregemisch mit erhöhtem Anteil an tri- und höherpolymerisierten Fettsäuren und einem Überschuß an Polyalkylenpolyaminen, welche einen bestimmten Imidazolingehalt aufweisen, in Anteilen von 0,5 - 5 Gew.-%, bezogen auf die Plastisolmasse, als Haftvermittler eingesetzt.

Mit diesen Polyaminoamiden ist eine deutliche Verbesserung der Haftfestigkeit zu erzielen. In geringen Konzentrationen und bei niedrigen Einbrenntemperaturen waren jedoch weitere Verbesserungen hinsichtlich Haftung, Thermostabilität und Reißdehnung des gehärteten PVC-Plastisols wünschenswert.

Der Erfindung liegt daher die Aufgabe zugrunde, Haftvermittler für PVC-Plastisole zu finden, welche auch in geringer Konzentration und bei niedriger Einbrenntemperatur hohe Haftungen der Schutzüberzüge bzw. hohe Bindefestigkeiten der Klebeverbindungen bei verbesserter Thermostabilität und Reißdehnung aufweisen.

Diese Aufgabe wird erfindungsgemäß gelöst durch ein Verfahren zur Herstellung von Überzügen und Klebeverbindungen für Werkstoffe, bei dem Plastisole auf Basis von feinteiligem Polyvinylchlorid bzw. Vinylchloridcopolymerisaten, welche übliche Füllstoffe, Additive, Lösungsmittel und Weichmacher enthalten können, aufgebracht werden, das dadurch gekennzeichnet ist, daß den Plastisolen als Haftvermittler Kondensationsprodukte, hergestellt aus

A) polymerisierten Fettsäuren und

B) Polykarbonsäuren mit $\geq$ 3 COOH-Gruppen bzw. deren Anhydride oder Ester der allgemeinen Formel $R^1\text{-}(COOR^2)_n$ I

in welcher $R^1$ ein gegebenenfalls substituierter gesättigter oder ungesättigter aliphatischer, araliphatischer oder aromatischer Kohlenwasserstoffrest mit 4 - 12 Kohlenstoffatomen, $R^2$ Wasserstoff oder ein Alkylrest mit 1 - 8 Kohlenstoffatomen und $N = \geq 3$ sein kann, in Mengen von 3 bis 2G Gew.-%, bezogen auf Fettsäuregemisch, und gegebenenfalls

C) aliphatischen, araliphatischen, aromatischen Dicarbonsäuren und aromatischen-Monocarbonsäuren.

D) einem Überschuß, bezogen auf Carboxylgruppen der Komponenten A), B) und gegebenenfalls C) an Polyalkylen-Polyaminen

in Anteilen von 0,5 - 5 Gew.-%, bezogen auf die Plastisolmasse, zugegeben und die derartig zubereiteten Plastisole bei Temperaturen ab 90 °C auf dem Wirkstoff eingebrannt werden.

Ein weiterer Gegenstand der vorliegenden Erfindung ist dadurch gekennzeichnet, daß die polymerisierten Fettsäuren gemäß A) einen erhöhten Anteil an tri- und höherpolymerisierten Fettsäuren (X) aufweisen.

Ein weiterer Gegenstand der vorliegenden Erfindung ist dadurch gekennzeichnet, daß in erster Stufe die Komponenten A) und D) polykondensiert und in zweiter Stufe das entstandene Aminoamid mit den Komponenten B) und gegebenenfalls C) umgesetzt wird.

2

Zur Herstellung der erfindungsgemäß als Haftvermittler eingesetzten Polyaminoamide können polymerisierte Fettsäuren mit variierenden Gehalten an monomeren, dimeren, trimeren und höherpolymeren Aminen verwendet werden.

Der Ausdruck polymersierte Fettsäure bezieht sich in allgemeiner Form auf polymerisierte Säuren, die aus "Fettsäuren" erhalten werden. Der Ausdruck Fettsäure umfaßt ungesättigte natürliche und synthetische einbasische aliphatische Säuren mit 8 - 22 Kohlenstoffatomen, bevorzugt 18 Kohlenstoffatomen. Die Fettsäuren lassen sich nach bekannten Verfahren polymerisieren.

Erfindungsgemäß verwendbare polymere Fettsäuren sind die handelsüblichen Produkte, welche etwa folgende Zusammensetzung haben:

monomere Säuren (Mo) 5 - 15 Gew.-%

dimere Säuren (Di)     55 - 80 Gew.-%

trimere und höherpolymeri

sierte Säuren (Tri)     10 - 35 Gew.-%.

Erfindungsgemäß bevorzugt werden jedoch polymerisierte Fettsäuren mit erhöhten trimerisierten und höher polymerisierten Gehalten (X). Diese Säuren sind herstellbar durch gezielte Reaktion nach einem radikalischen Mechanismus entsprechend der DE-OS 25 66 211 oder durch allgemein bekannte Destillationsverfahren aus den typischen im Handel erhältlichen Produkten und haben etwa die folgende Zusammensetzung:

monomere Säuren (Mo) 0 - 5 Gew.-%

dimere Säuren (Di)     10 -.25 Gew.-%

trimere und höherpolymeri

sierte Säuren (Tri; X)   90 - 75 Gew.-%.

Die erfindungsgemäß mitverwendbaren Karbonsäuren oder Karbonsäureester fallen unter die allgemeine Formel (I)

$R^1$-(COOR$^2$)$_n$ I

in welcher $R^1$ ein gegebenenfalls substituierter gesättigter oder ungesättigter aliphatischer, araliphatischer oder aromatischer Kohlenwasserstoffrest mit 4 - 12 Kohlenstoffatomen, $R^2$ Wasserstoff oder ein Alkylrest mit 1 - 8 Mohlenstoffatomen und n = $\geq$ 3 sein kann.

Als Beispiele für diese Säuren seien Trimellithsäureanhydrid, Butantetrakarbonsäure genannt.

Als Beispiele für die gegebenenfalls mitverwendbaren Karbonsäuren gemäß C) seien genannt: Bernsteinsäure, Glutorsäure, Adipinsäure, Pimelinsäure, Korksäure, Azelainsäure, Sebazinsäure, Dekandikarbonsäure, Phthalsäure, Isophthalsäure, Terephthalsäure, Benzoesäure. Phthalsäure, Isophthalsäure, Benzoesäure und insbesondere Terephthalsäure werden erfindungsgemäß bevorzugt.

Der Anteil der Karbonsäuren gemäß B) beträgt 3 - 20 Gew-%, insbesondere 7 - 15 Gew.-%, bezogen auf Fettsäuregemisch. Der Anteil der gegebenenfalls mitverwendbaren Karbonsäuren gemäß C) kann 1 - 80 Gew.-%, bezogen auf Komponente B), betragen.

Als erfindungsgemäß mitzuverwendende Polyalkylenpolyamine kommen insbesondere die zur Imidazolinbildung befähigten Amine der allgemeinen Formel II

$H_2N$-(-$CH_2$-$CH_2$-NH-)-$_m$$CH_2$-$CH_2$-$NH_2$ II

mit m = 1 - 5, wie z. B. Diäthylentriamin, Triäthylentetramin, Tetraäthylenpentamin, die gegebenenfalls auch Anteile an anderen Aminen enthalten können (vgl. Ullmann Enzyklopädie der technischen Chemie, Bd 14, 1963, S. 74), in Betracht, wie auch die nicht zur Imidazolinbildung befähigten Polyalkylenpolyamine der allgemeinen Formel $H_2N$-($CH_2$-$CH_2$-$CH_2$-NH)-$_m$$CH_2$-$CH_2$-$CH_2$-$NH_2$ mit n = 1 - 4 wie z. B. Dipropylentriamin, Tripropylentetramin. Auch Polyalkylenpolyamine mit Äthylen- und Propylen-Brücken als Alkylenreste, die durch Cyanäthylierung der Amine und anschließende Hydrierung erhalten werden, können eingesetzt Werden (z. B. $N_3$-Amin, $N_4$-Amin; vgl. Firmenprospekt Der BASF AG, 1976).

Erfindungsgemäß können auch andere Amine verwendet bzw. mitverwendet werden wie Amine der allgemeinen Formel III

$H_2N$-R-$NH_2$ III

in welcher R ein aliphatischer, gegebenenfalls substituierter oder durch Heteroatome, insbesondere Sauerstoff, unterbrochener Kohlenwasserstoffrest mit 2 - 36, insbesondere 6 - 20 und 36 Kohlenstoffatomen ist, wie 1,2-Diaminoäthan, 1,6-Diaminohexan, 1,9-Diaminononan, 1,12-Diaminododekan, Dimerfettsäurediamin (hergestellt nach bekannten Verfahren aus dimeren Fettsäuren), die 2,2,4(4,4,2)-Trimethylhexamethylendiamine, 1,7-Diamino-4-oxa-heptan, 1,12-Diamino-4,9-dioxa-dodekan, 1,20-Diamino-4,17-dioxa-eicosan oder cyclische bzw. alicyclische Amine, welche gegebenenfalls Heteroatome, insbesondere Stickstoff, enthalten wie z. B. 1,4-Diaminocyclohexan, Isophorondiamin, Piperazin, Dimethylpiperazin, N-Aminoäthylpiperazin.

Der Überschuß an Aminen wird so gewählt, daß die Polyaminoamide Aminzahlen zwischen 200 und 450, vorzugsweise zwischen 300 und 400 Aufweisen.

Die Umsetzung erfolgt in an sich bekannter Weise, in der alle Komponenten gleichzeitig zwischen ca. 210 °C bis 260 °C, gegebenenfalls im Vakuum, umgesetzt werden.

Erfindungsgemäß wird jedoch eine Umsetzung bevorzugt, bei der in erster Stufe ein Polyaminoamid aus den Komponenten A) und D) gebildet und dieses dann in zweiter Stufe mit der Komponente B) und gegebenenfalls C) unter an sich gleichen Bedingungen umgesetzt wird.

Eine geeignete Variation dieses Verfahrens besteht darin daß in erster Stufe die Komponenten A) und D) mit einem Teil der Komponenten B) und gegebenenfalls C) zu einem Polyaminoamid umgesetzt werden und in

3

zweiter Stufe die Weiterreaktion mit dem Rest der Komponente B) und gegebenenfalls C) erfolgt.

Die Reaktionsbedingungen können dabei in bekannter Weise so variiert werden, daß die Endprodukte den jeweils gewünschten Imidazolingehalt (Y) aufweisen.

Die erfindungsgemäß bevorzugten Haftvermittler werden unter Mitverwendung eines polymerisierten Fettsäuregemisches mit einem erhöhten Anteil an tri- und höherpolymerisierten Fettsäuren (X) hergestellt und weisen einen Imidazolinghalt von (Y) auf, wobei, wenn einer der Werte von (X) oder (Y) die 40 %-Grenze unterschreitet, der Wert der anderen Komponente mindestens 40 + Z (wobei Z die Differenz des kleineren Wertes zu 40 ist), vorzugsweise jedoch 40 + 2 Z, betragen sollte.

Die Gehalte antri- und höherpolymerisierten Fettsäuren (X) sowie der Imidazolingehalt (Y) sind aufgrund der komplexen Zusammensetzung der Komponenten vor allem für den unteren Bereich variierbar. Die erfindungsgemäß erzielbaren Effekte hängen zwar in erster Linie von Art und Menge der mitverwendeten Karbonsäuren gemäß B) ab, werden aber auch beeinflußt durch den Gehalt an tri- und höherpolymerisierten Säuren sowie deren Verhältnis zueinander, durch den Imidazolingehalt des Polyaminoamid-Polyaminoimidazolin-Gemisches sowie durch Art und Menge des verwendeten Amins oder Amingemisches.

Bevorzugt werden Polyaminoamide aus Fettsäuren mit ≥ 40 % tri- und höherpolymerisierten Anteilen und einem Imidazolingehalt des Kondensationsprodukts von ebenfalls ≥ 40 %. Die obere Grenze der Gehalte an tri- und höherpolymerisierten Fettsäuren ist 100 %; die obere Grenze des Imidazolingehaltes bei den Polyaminoimidazolinen ist der jeweils praktisch erzielbare Höchstwert des für das jeweilige Gemisch errechenbaren theoretisch möglichen Gehaltes.

Unterschreitet einer der Werte von X oder Y die 40 %-Grenze, so sollte der Wert der anderen Komponenten jedoch zur Erzielung eines deutlichen Effektes mindestens 40 + Z, wobei Z Differenz des kleineren Wertes zu 40 ist, vorzugsweise jedoch 40 + 40 + 2 Z, betragen.

Der Bereich, in dem beide Werte niedrig liegen, ist zwar weniger bevorzugt, jedoch innerhalb enger Orenzen noch möglich. So sollte, liegt einer der Werte unter 40 % und der andere unter 50 %, die Differenz des kleineren Wertes zu 40 nicht größer als 10 sein.

Die mit der Erfindung erzielten Vorteile liegen darin, daß die Plastisolmischungen praktisch unbegrenzt lagerstabil sind, keine oder nur minimale Farbänderungen nach dem Einbrennen aufweisen, eine deutliche Steigerung der Haftfestigkeiten erzielbar ist, und insbesondere darin, daß diese Steigerung mit geeigneten Formulierungen auch mit geringen Haftvermittlerkonzentrationen bei Einbrenntemperaturen ab 90 °C, vorzugsweise ab 110 °C, erzielbar ist.

In der Regel kann die für die entsprechende PVC-Formulierung günstigste Einbrenntemperatur - welche von der Gelierungstemperatur der verwendeten PVC-Formulierung mitbestimmt wird - durch einige einfache Orientierungsversuche ermittelt werden.

Als zu beschichtende bzw. zu verklebende Substrate kommen alle auf diesem Gebiet üblichen Werkstoffe, insbesondere Metalle und Glas, in Betracht.

Gegebenenfalls können die erfindungsgemäß verwendeten, oben beschriebenen Polyaminoamide/Polyaminoimidazolin-Gemische mit gebräuchlichen Ketonen wie Aceton, Methyläthylketon, Diäthylketon, Methylisobutylketon, Cyclohexanon, Cyclopentanon, Diisobutylketon, 3,3,5-Trimethylcyclohexanon, Methylphenylketon oder mit Aldehyden wie Acetataldehyd, Butyraldehyd, Isobutyraldehyd, Benzaldehyd zu den entsprechenden Schiffschen Basen und gegebenenfalls naminen umgesetzt werden.

Die Umsetzung erfolgt nach bekannten Verfahren, sie kann durch Säuren katalysiert mit oder ohne Lösungsmittel durchgeführt werden. Es ist auch möglich, die Carbonylverbindungen selbst- anstelle des Lösungsmittels - als Schleppmittel für das abzuscheidende Reaktionswasser zu verwenden.

Gegebenenfalls können die freien Aminogruppen der obengenannten Polyaminoamide/Polyaminoimidazoline auch mit im Unterschuß einzusetzenden Epoxidverbindungen adduktiert werden.

Als geeignete Epoxidverbindungen seien z. B. Epoxide, die sich von mehrwertigen Phenolen, insbesondere Bisphenolen, wie z. B. Diphenylolpropan (Bisphenol A), Diphenylolmethan (Bisphenol F) und Phenol-Formaldehyd-Kondensationsprodukten (Novolaken) sowie von aromatischen Di- und Polycarbonsäuren wie z. B. den Phthalsäuren ableiten, genannt.

Die Addukte erhält man, indem man ein Äquivalent aktiven Wasserstoff der Aminverbindung mit 0,5 - 0,005, insbesondere 0,2 - 0,03 Äquivalente Epoxidsauertoff des Polyepoxids umsetzt.

Des weiteren können die Polyaminoamide/Polyaminoimidazolin-Gemische, deren aminogruppenhaltige Epoxidaddukte sowie die aus diesen beiden Produktgruppen herstellbaren Schiffschen Basen bzw. gegebenenfalls Enamine auch miteinander vermischt und als Haftvermittler verwendet werden.

Die in den Beispielen verwendeten Fettsäuren haben die folgende Zusammensetzung:

(1) Zusammengesetzung laut GLC:
Monomere Fettsäure 9 %
Dimere Fettsäure 75 %
Trimere Fettsäure und höher
polymere Fettsäuren 16 %
(2) Zusammensetzung laut GLC:
Monomere Fettsäure 1 %
Dimere Fettsäure 25 %
Trimere Fettsäure und höher
polymere Fettsäuren 74 %

(3) Zusammensetzung laut GLC:
Monomere Fettsäure 1 %
Dimere Fettsäure    96 %
Trimere Fettsäure und höher
polymere Fettsäuren 3 %

**Herstellung der Haftvermittler für die erfindungsgemäßen Plastisole:**

**Beispiele für die Nachkondensation**

I. In den nachfolgenden Beispielen wurden zu einem handelsüblichen Polyaminoamid a) die in der Tabelle aufgeführten Karbonsäuren gegeben und die Mischung einer Nachkondensation unterworfen, indem sie unter Stickstoff auf 210 °C aufgeheizt und 1 Stunde bei dieser Temperatur gehalten wurde. Danach wurde innerhalb einer Stunde ein Vakuum von ca. $1,3.10^4$ Pa angelegt und eine weitere Stunde bei 210 °C und $1,3.10^4$ Pa nachkondensiert. Die Kondensationsbedingungen können dabei je nach gewünschtem IA-Gehalt in bekannter Weise variiert werden.

Die erhaltenen Reaktionsprodukte wurden als 60 %ige Mischung mit den angegebenen Weichmachern dem Plastisol zugesetzt.

II. Anstelle des Polyaminoamids a) wurde das handelsübliche Polyaminoamid b) (Az 367, IA 60 %) wie o. a. nachkondensiert und eingesetzt.

III. Anstelle des Polyaminoamids a) wurde ein Polyaminoamid ggemäß der DE-AS 26 54 871 aus 800 g polymerer Fettsäure (1) und 200 g polymerer Fettsäure (2) und 534 g Triäthylentetramin hergestellt (Az 387, IA 78 %) und wie o. a. nachkondensiert und eingesetzt.

IV. Wie Beispiel III mit dem Unterschied, daß als polymerisierte Fettsäure die Fettsäure (3) eingesetzt wurde.

**V. Beispiel für die statistische Kondensation**

Es wurde ein Polyaminoamid hergestellt durch gleichzeitige Kondensation von 250 g polymerer Fettsäure (1), 250 g polymerer Fettsäure (2) und 267 g Triäthylentetramin sowie den in der Tabelle angegebenen Tricarbonsäuren unter den unter 1. angegebenen Bedingungen.

**Polyaminoamide:**

a) Kondensationsprodukt auf Basis dimerisierter Fettsäuren mit 5 % Monomerer Fettsäure, 50 % Dimerer Fettsäure, 45 % Tri- und Höherpolymerer Fettsäure (1 Mischung aus (1) und (2) und Triäthylentetramin. Das Polyaminoamid weist eine Aminzahl von 376 und einen Imidazolingehalt von 60 % auf.

b) Kondensationsprodukt auf Basis dimerisierter Fettsäuren mit 16 % Monomerer Fettsäure, 75 % Dimerer Fettsäure, 9 % Tri- und Höherpolymerisierter Fettsäure und Triäthylentetramin. Das Polyaminoamid weist eine Aminzahl von 390 und einen Imidazolingehalt von 60 auf.

**Herstellung der Plastisole**

Zu einem Plastisol, bestehend aus
45 Gewichtsteilen eines verpastbaren Polyvinylchlorids mit K-Wert 70
55 Gewichtsteilen Phthalsäure-di-2-äthylhexylester,
100 Gewichtsteilen eines Füllstoffgemisches aus 50 % Kreide und 50 % Bariumsulfat
1,5 Gewichtsteilen Di-iso-butyl-zinn-isooctylthioglycolsäureester
werden 1 Gewichtsprozent der genannten Haftvermittler oder beliebige Abmischungen dieser Produkte untereinander, bezogen auf die Gesamtmischung, zugesetzt.

Die Haftvermittler können aber auch anderen üblichen Plastisolformulierungen als oben angegeben zugesetzt werden, um die erfindungsgemäßen selbsthaftenden Plastisole zu erhalten.

Die mit den erfindungsgemäßen Plastisolen erzielbaren Bindefestigkeiten von Verklebungen wurden in Anlehnung an DIN 53 283 durch Messung der Zugscherfestigkeit bestimmt.

Dazu wurden Bonderbleche, Type 901 der Fa. Metallgesellschaft, Frankfurt, als Fügeteile verwendet. Maße der Fügeteile: 2,5 cm x 10,5 cm x 0,15 cm (Breite x Länge x Dicke).

Die Schichtdicke des Plastisols in der Klebfuge wurde mittels Distanzstücke auf 2 mm eingestellt.

Die Fügeteile wurden bei 160 °C 30 Minuten lang erhitzt und dabei 15 mm überlappend verklebt. Es wurden die folgenden Zugscherfestigkeiten erhalten:

Zur Überprüfung auf EC-Blechen (elektrochemisch beschichtete Pleche) wird der Plastisolfilm kontinuierlich steigend in einer Schichtstärke von 0 - 3 mm aufgetragen und anschließend 30 min bei 120 °C erhitzt.

In den erkalteten Film wird dann ein halbmondförmiger Schnitt eingebracht und durch manuelles Abziehen (ohne Hilfsmittel) die Filmhaftung auf dem Untergrund visuell beurteilt.

Haftung sehr gut - Ablösung des Filmsinicht möglich Haftung gut - Ablösung des Films nur teilweise möglich.

**Tabelle**

| Bei-spiel | Zusammen-setzung | Verdünnung 60 %ig in | Haftung auf EC-Plechen | Bindefestigkeit an Bonderblechen 901 in $N/cm^2$ |
|---|---|---|---|---|
| 1 | 500 I + 18 g BTS[3] | 90% DOP[1] 10% PA[2] | gut | 261 |
| 2 | 500 g I + 25 g TMSA[4] | " | gut | 254 |
| 3 | 500 g II + 25 g TMSA | " | sehr gut | 280 |
| 4 | 500 g III + 25 g TMSA | " | sehr gut | 285 |
| 5 | 500 g IV + 25 g BTS | " | gut | 268 |
| 6 | 750 g V + 27 g BTS | " | gut | 248 |
| 7 | 450 g I + 14,5 g TMSA + 10,8 g Ben-zoesäure | " | sehr gut | 273 |
| 8 | 450 g I + 14,5 g TMSA + 10,4 g Adi-pinsäure | " | sehr gut | 297 |
| 9 | 450 g I + 14,5 g DMT[5] + 11,2 g TMSA | " | sehr gut | 292 |

Alle Haftvermittler wurden in einer Menge von 1 (bezogen auf Plastisol) zugesetzt)

1 DOP = Dioctylphthalat
2 BA = Benzylalkohol
3 BTS = 1,2,3,4-Butantetracarbonsäure
4 TMSA = Trimellithsäureanhydrid
5 DMT = Dimethylterephthalat

**Patentansprüche**

1. Verfahren zur Herstellung von Überzügen und Klebeverbindungen für Werkstoffe, bei dem Plastisole auf Basis von feinteiligem Polyvinylchlorid bzw. Vinylchloridcopolymerisaten, welche übliche Füllstoffe, Additive, Lösungsmittel und Weichmacher enthalten können, aufgebracht werden, dadurch gekennzeichnet, daß den Plastisolen als Haftvermittler Kondensationsprodukte, hergestellt aus

A) polymerisierten Fettsäuren und

B) Polykarbonsäuren mit ≥ 3 COOH-Gruppen bzw. deren Anhydride der allgemeinen Formel
$R^1\text{-}(COOR^2)_n$ I

in welcher $R^1$ ein gegebenenfalls substituierter gesättigter oder ungesättigter aliphatischer, araliphatischer oder aromatischer Kohlenwasserstoffrest mit 4 - 12 Kohlenstoffatomen, $R^2$ Wasserstoff oder ein Alkylrest mit 1 - 8 Kohlenstoffatomen und N = > 3 sein kann, in Mengen von 3 bis 20 Gew.-%, bezogen auf Fettsäuregemisch, und gegebenenfalls

C) aliphatischen, araliphatischen, aromatischen Dicarbonsäuren und aromatischen Monocarbonsäuren und

D) einem Überschuß, bezogen auf Carboxylgruppen der Komponenten A), B) und gegebenenfalls C) an Polyalkylenpolyaminen

in Anteilen von 0,5 - 5 Gew.-%, bezogen auf die Plastisolmasse, zugegeben und die derartig zubereiteten Plastisole bei Temperaturen ab 90 °C auf dem Werkstoff eingebrannt werden.

2. Verfahren zur Herstellung von Überzügen und Klebeverbindungen gemäß Anspruch 1, dadurch gekennzeichnet, daß die polymerisierten Fettsäuren gemäß A) einen erhöhten Anteil an tri- und höherpolymerisierten Fettsäuren (X) aufweisen.

3. Verfahren zur Herstellung von Überzügen und Klebeverbindungen gemäß den Ansprüchen 1 bis 2, dadurch gekennzeichnet, daß die Kondensationsprodukte aus A), B), D) und gegebenenfalls C) Imidazolingruppen (Y) enthalten.

4. Verfahren zur Herstellung von Überzügen und Klebeverbindungen gemäß den Ansprüchen 2 bis 3, dadurch gekennzeichnet, daß, wenn einer der Werte von (X) oder (Y) die 40 %-Grenze unterschreitet, der Wert der anderen Komponente mindestens 40 + Z (wobei Z die Differenz des kleineren Wertes zu 40 ist), vorzugsweise jedoch 40 + 2 Z betragen sollte.

5. Verfahren zur Herstellung von Überzügen und Klebeverbindungen gemäß den Ansprüchen 1 bis 4, dadurch gekennzeichnet, daß die Karbonsäure gemäß B) in Mengen von 3 bis 20 Gew.-%, bezogen auf Fettsäuregemisch, eingesetzt wird.

6. Verfahren zur Herstellung von Überzügen und Klebeverbindungen gemäß den Ansprüchen 1 bis 5, dadurch gekennzeichnet, daß als Karbonsäuren gemäß C) aromatische Karbonsäuren verwendet werden.

7. Verfahren zur Herstellung von Überzügen und Klebeverbindungen gemäß den Ansprüchen 1 bis 6, dadurch gekennzeichnet, daß die Karbonsäuren gemäß C) in Mengen von 1 bis 80 Gew.-% (bezogen auf Komponente B) mitverwendet werden.

8. Verfahren zur Herstellung von Überzügen und Klebeverbindungen gemäß den Ansprüchen 1 bis 7, dadurch gekennzeichnet, daß in erster Stufe die Komponenten A) und D) polykondensiert und in zweiter Stufe das entstandene Aminoamid mit den Komponenten 3) und gegebenenfalls C) umgesetzt wird.

9. Verfahren zur Herstellung von Überzügen und Klebeverbindungen gemäß den Ansprüchen 1 bis 8 dadurch gekennzeichnet, daß als Haftvermittler Umsetzungsprodukte der aus A), P), D) und gegebenenfalls C) hergestellten Kondensationsprodukte mit Ketonen oder Aldehyden verwendet werden.

10. Verfahren zur Herstellung von Überzügen und Klebeverbindungen gemäß den Ansprüchen 1 bis 9, dadurch gekennzeichnet, daß als Haftvermittler Addukte der aus A), B), D) und gegebenenfalls C) hergestellten Kondensationsprodukte mit Epoxidgruppen enthaltenden Verbindungen verwendet werden.

11. Plastisole für die Herstellung von Überzügen auf Werkstoffen, enthaltend feinteiliges Polyvinylchlorid bzw. Vinylchloridcopolymerisate, übliche Weichmacher, Füllstoffe, Additive, dadurch gekennzeichnet, daß als Haftvermittler die gemäß einem oder mehrerer der Ansprüche 1 bis 10 gekennzeichneten Kondensationsprodukte verwendet werden.

**Claims**

1. Process for the production of coatings and adhesives for materials. wherein plastisols are applied based on finely divided polyvinylchloride and/or vinylchloride copolymers, which may contain the usual fillers, additives, solvents and plasticizers, characterised in that the plastisols have added thereto adhesive condensation products prepared from

(A) polymerised fatty acids and

(B) polycarboxylic acids with ≥ 3 COOH groups of the general formula
$R^1\text{-}(COOR^2)_n$ I

and/or their anhydrides. in which $R^1$ is an optionally substituted saturated or unsaturated aliphatic, araliphatic or aromatic hydrocarbon group With 4-12 carbon atoms, $R^2$ is hydrogen or an alkyl group with 1-8 carbon atoms and n ≥ 3, in an amount of 3 to 20% by weight relative to the fatty acids, and optionally

(C) aliphatic, araliphatic. aromatic dicarboxylic acids and aromatic monocarboxylic acids and

**0 098 372**

(D) an excess of polyahylenepolyamines relative to the carboxyl groups of components (A). (B) and optionally (C)

in proportions of 0.5-5% by weight relative to the plastisol mass, and the resulting plastisol is baked onto to the material at a temperature above 90°C.

2. Process for the production of coatings and adhesives according to claim 1, characterised in that the polymerised fatty acids according to (A) contain a high proportion of tri- and higher-polymerised fatty acids (X).

3. Process for the production of coatings and adhesives according to claims 1 to 2, characterised in that the condensation products from (A), (B), (D) and optionally (C) contain imidazolin groups (Y).

4. Process for the production of coatings and adhesives according to claims 2 to 3, characterised in that if the proportion of (X) or (Y) is less than 40%, the proportion of the other components is at least 40+Z (wherein Z is the difference between the lower proportion and 40), and preferably 40+2Z.

5. Process for the product of coatings and adhesives according to claims 1 to %, characterised in that the carboxylic acid according to (B) is used in an amount of 3 to 20% by weight relative to the fatty acids.

6. Process for the production of coatings and adhesives according to claims 1 to 5, characterised in that the carboxylic acids according to (C) are aromatic carboxylic acids.

7. Process for the production of coatings and adhesives according to claims 1 to 8, characterised in that the carboxylic acids according to (C) are used in amounts of 1 to 80% by weight relative to component (B).

8. Process for the production of coatings and adhesives according to claims 1 to 7, characterised in that in the first step the components (A) and (D) are polycondensed, and in the second step the resulting aminoamide is reacted with components (B) and optionally (C).

9. Process for the production of coatings and adhesives according to claims 1 to 8, characterised in that as adhesive conversion products, the condensation products prepared from (A), (B), (D) and optionally (C) are used with ketones or aldehydes.

10. Process for the product of coatings and adhesives according to claims 1 to 9, characterised in that as adhesive adducts the condensation products prepared from (A), (B), (C) and optionally (D) are used with compounds containing expoxide groups.

11. Plastisols for the production of coatings on materials, containing finely divided polyvinylchloride and/or vinyl chloride copolymers, the usual plasticizers, fillers and additives, characterised in that as adhesives are used the condensation products according to one or more of claims 1 to 10.

**Revendications**

1. Procédé de préparation de revêtements et d'assemblages collés pour matériaux, dans lequel on applique des plastisols à base de poly(chlorure de vinyle) ou de copolymères de chlorure de vinyle en fines particules pouvant contenir les matières de charge, additifs, solvants et plastifiants usuels. caractérisé en ce qu'on incorpore aux plastisols, en tamt que promoteurs d'adhésion, des produits de condensation préparés à partir

A) d'acides gras polymérisés et

B) d'acides polycarboxyliques avec $\geqslant$ 3 groupes COOH, respectivement de leurs anhydrides ou de leurs esters de formule générale

$R^1 - (COOR^2)_n$ I

dans laquelle $R^1$ peut être un reste hydrocarboné aliphatique, araliphatique ou aromatique saturé ou insaturé avec 4 à 12 atomes de carbone, éventuellement substitué, $R^2$ peut être l'hydrogène ou un reste alkyle avec 1 à 8 atomes de carbone et N est $\geqslant$ 3, en des quantités de 3 à 30% en poids par rapport au mélange d'acides gras et éventuellement à partir

C) d'acides dicarboxyliques aliphatiques, araliphatiques, aromatiques et d'acides monocarboxyliques aromatiques et

D) d'un excès de polyalkylène-polyamines, par rapport aux groupes carboxyles des constituants A), B) et le cas échéant C), à raison de 0,5 à 5% en poids par rapport à la masse de plastisol et qu'on cuit les plastisols préparés de cette manière sur le matériau à des températures à partir de 90°C.

2. Procédé pour la préparation de revêtements et d'assemblages collés selon la revendication 1, caractérisé en ce que les acides gras polymérisés selon A) comportent une fraction accrue en acides gras trimères et d'un degré de polymérisation plus élevé (X).

3. Procédé pour la préparation de revêtements et d'assemblages collés selon les revendications 1 à 2, caractérisé en ce que les produits de condensation obtenus à partir de A), B), D) et éventuellement de C) renferment des groupes imidazoline (Y).

4. Procédé pour la préparation de revêtements et d'assemblages collés selon les revendications 2 à 3, caractérisé en ce que, lorsqu'une des valeurs de (X) ou de (Y) dépasse vers le bas la limite de 40%, la valeur des autres constituants devra s'élever à au moins 40 + Z (Z étant la différence de la plus faible valeur par rapport à 40), de préférence à 40 + 2 Z.

5. Procédé pour la préparation de revêtements et d'assemblages collés selon les revendications 1 à 4, caractérisé en ce que l'acide carboxylique selon B) est mis en oeuvre en des quantités de 3 à 20% en poids par rapport au mélange d'acides gras.

8

6. Procédé pour la préparation de revêtements et d'assemblages collés selon les revendications 1 à 5, caractérisé en ce qu'on emploie comme acides carboxyliques selon C) des acides carboxyliques aromatiques.

7. Procédé pour la préparation de revêtements et d'assemblages collés selon les revendications 1 à 6, caractérisé en ce que les acides carboxyliques selon C) sont utilisés simultanément à raison de 1 à 80% en poids (par rapport au constituant B).

8. Procédé pour la préparation de revêtements et d'assemblages collés selon les revendications 1 à 7, caractérisé en ce que, dans un premier stade, les constituants A) et D) sont polycondensés et que, dans un deuxième stade, l'amino-amide formé est mis à réagir avec les constituants B) et éventuellement C).

9. Procédé pour la préparation de revêtements et d'assemblages collés selon les revendications 1 à 8, caractérisé en ce qu'on utilise, en tant que promoteurs d'adhésion, des produits de réaction des produits de condensation obtenus à partir de A), B), D) et éventuellement de C), avec des cétones ou des aldéhydes.

10. Procédé pour la préparation de revêtements et d'assemblages collés selon les revendications 1 à 9, caractérisé en ce qu'on utilise, en tant que promoteurs d'adhésion, des produits d'addition des produits de condensation obtenus à partir de A), B), D) et éventuellement de C), avec des composés renfermant des groupes époxy.

11. Plastisols pour la préparation de revêtements sur des matériaux, contenant du poly(chlorure de vinyle) ou des copolymères de chlorure de vinyle en fines particules, les plastifiants, matières de charge, additifs usuels, caractérisés en ce que les produits de condensation caractérisés selon une ou plusieurs des revendications 1 à 10 sont employés comme promoteurs d'adhésion.